# FASCICULE DE BREVET EUROPEEN

(11) **EP 3 626 624 B1**
(45) Date de publication et mention de la délivrance du brevet: **11.11.2020**
(21) Numéro de dépôt: 19197059.9
(22) Date de dépôt: 12.09.2019
(51) Int. Cl.: B64D 27/18, B64D 27/26, B64F 5/10

(54) **PROCÉDÉ DE MONTAGE D'UN MÂT D'AÉRONEF**
MONTAGEVERFAHREN VON EINEM PYLON EINES FLUGZEUGS
METHOD FOR MOUNTING AN AIRCRAFT PYLON

(30) Priorité: 19.09.2018 FR 1858446
(43) Date de publication de la demande: 25.03.2020
(73) Titulaire: AIRBUS OPERATIONS (S.A.S.), 31060 Toulouse (FR)
(72) Inventeur: PAUTIS, Olivier, 31060 TOULOUSE Cedex 9 (FR); MARTINEZ, Pascal, 31060 TOULOUSE Cedex 9 (FR)
(74) Mandataire: Sarraméa, Claude

(56) Documents cités:
- FR-A1- 2 891 247
- US-A- 3 831 888
- US-A1- 2018 178 923

## Description

La présente demande se rapporte à un procédé de montage d'un mât d'aéronef.

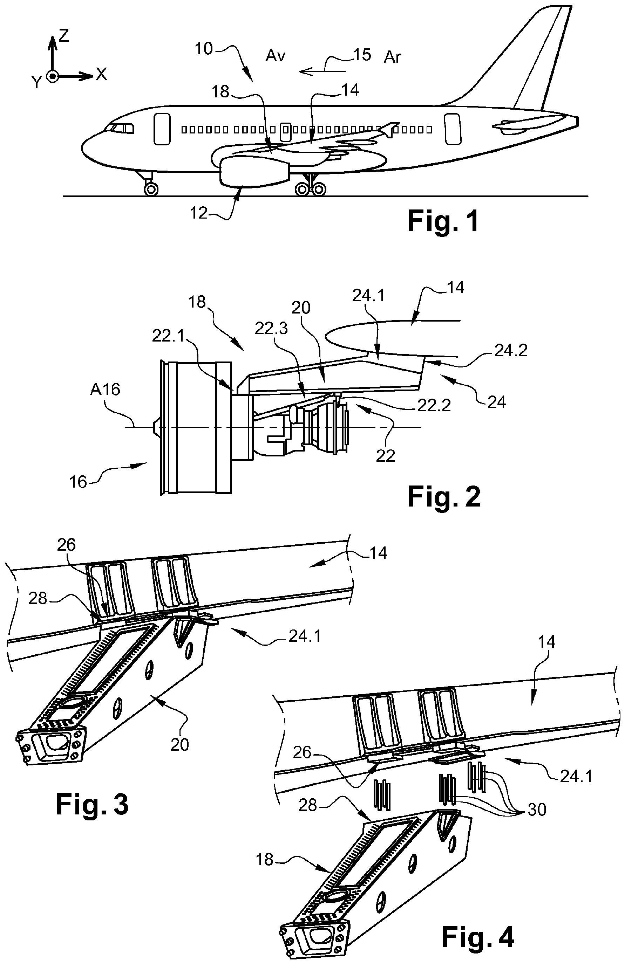

Selon une configuration visible sur les figures 1 et 2, un aéronef 10 comprend plusieurs ensembles propulseurs 12 qui sont positionnés sous la voilure 14 de l'aéronef 10.

Un ensemble propulseur 12 comprend un moteur 16, une nacelle (non représentée sur la figure 2) positionnée autour du moteur 16 et un mât 18 qui assure la liaison entre le moteur 16 et la voilure 14. Le mât 18 comprend une structure primaire 20 qui est reliée au moteur 16 par une attache-moteur 22 et à la voilure 14 par une attache-voilure 24.

Pour la présente demande, une direction longitudinale X est une direction parallèle à l'axe moteur A16. Une direction transversale horizontale Y est une direction perpendiculaire à l'axe moteur A16 et horizontale. Une direction transversale verticale Z est une direction perpendiculaire à l'axe moteur A16 et verticale. Un plan longitudinal vertical est un plan parallèle aux directions longitudinale X et verticale.

Les termes « avant » ou « Av » et « arrière » ou « Ar » se réfèrent à une direction d'avance de l'aéronef 10 suite à la poussée exercée par les ensembles propulseurs 12, cette direction étant représentée par la flèche 15 sur la figure 1.

Selon un mode de réalisation visible sur la figure 2, l'attache-moteur 22 comprend une attache-moteur avant 22.1, une attache-moteur arrière 22.2 et des bielles de poussée 22.3 disposées de part et d'autre du moteur 16. L'attache-voilure 24 comprend une attache-voilure avant 24.1 et une attache-voilure arrière 24.2.

Selon un premier mode de réalisation, l'attache-voilure avant comprend deux manilles simples disposées dans des plans longitudinaux verticaux, une première extrémité de chaque manille étant reliée par un axe de liaison à une chape solidaire de la structure primaire 20 du mât 18 et une deuxième extrémité de chaque manille étant reliée par un axe de liaison à une chape solidaire de la voilure 14. Selon ce premier mode de réalisation, les manilles et/ou les chapes peuvent être configurées de manière à compenser la courbure de la voilure de sorte que les axes de liaison soient approximativement horizontaux afin de faciliter leur montage.

Ce premier mode de réalisation a pour inconvénient d'être relativement encombrant selon la direction verticale.

Selon un deuxième mode de réalisation illustré sur les figures 3 et 4, une attache-voilure avant 24.1 comprend au moins une première surface de contact 26 solidaire de la voilure 14, au moins une deuxième surface de contact 28 solidaire de la structure primaire 20 du mât 18 et une pluralité d'éléments de liaison 30, comme par exemple des boulons, pour maintenir plaquées les première et deuxième surfaces de contact 26, 28 l'une contre l'autre et assurer la liaison entre le mât 18 et la voilure 14. Compte tenu de la courbure de la voilure, le plan de contact des première et deuxième surfaces de contact 26, 28 n'est pas horizontal mais incliné selon un plan sensiblement tangent à un panneau inférieur de la voilure 14 et les éléments de liaison 30 sont également inclinés.

Ce deuxième mode de réalisation permet de réduire l'encombrement selon la direction verticale de l'attache-voilure avant 24.1. Toutefois, le positionnement du mât par rapport à la voilure s'avère difficile compte tenu de l'inclinaison du plan de contact des première et deuxième surfaces de contact 26, 28.

Le document FR 2 891 247 A1 décrit un procédé de montage d'un mât d'aéronef selon l'art antérieur.

### EXPOSE DE L'INVENTION :

La présente invention vise à remédier à tout ou partie des inconvénients de l'art antérieur.

A cet effet, l'invention a pour objet un procédé de montage d'un mât d'aéronef relié à une voilure par au moins une attache-voilure avant comprenant :
- au moins une première platine solidaire de la voilure qui présente une première surface de contact,
- au moins une deuxième platine solidaire du mât qui présente une deuxième surface de contact,
- une pluralité d'éléments de liaison définitifs reliant, lorsque le mât est monté, les première et deuxième platines en maintenant les première et deuxième surfaces de contact l'une contre l'autre au niveau d'un plan de contact incliné pour chaque élément de liaison définitif, les première et deuxième platines comportant respectivement un couple de premier et deuxième trous de passage,
- au moins un pion de cisaillement positionné, lorsque le mât est monté, à cheval dans un couple de premier et deuxième logements prévus respectivement dans les première et deuxième platines et qui présentent chacun une section identique à celle du pion de cisaillement.

Le procédé de montage se caractérise en ce qu'il comprend :
- une étape de pré-positionnement des première et deuxième surfaces de contact, de sorte que les première et deuxième surfaces de contact soient approximativement parallèles et faiblement espacées ou en contact l'une contre l'autre, et de pré-alignement approximatif des premier et deuxième trous de passage de chaque couple de premier et deuxième trous de passage et des premier et deuxième logements de chaque couple de premier et deuxième logements,
- une étape de mise en place et de serrage d'éléments de liaison temporaires dans certains couples de premier et deuxième trous de passage de manière à maintenir plaquées les première et deuxième surfaces de contact l'une contre l'autre,
- une étape de mise en place et d'expansion d'au moins un élément expansible radialement dans l'au moins un couple de premier et deuxième logements,
- une étape de mise en place et de serrage d'éléments de liaison définitifs dans au moins certains des couples de premier et deuxième trous de passage non occupés par les éléments de liaison temporaires,
- des étapes de retrait du ou des élément(s) expansible(s) radialement et de mise en place du ou des pion(s) de cisaillement ainsi que de retrait des éléments de liaison temporaires et de mise en place des éléments de liaison définitifs.

Ce procédé de montage d'un mât d'aéronef permet d'en simplifier la mise en œuvre.

Selon une autre caractéristique, chaque élément de liaison temporaire comprend au moins un élément de compression positionné sous le mât, l'étape de serrage des éléments de liaison temporaires permettant d'obtenir un effort de compression de chaque élément de compression, l'effort de compression de chaque élément de compression des éléments de liaison temporaires et l'élément expansible radialement étant configurés de manière à permettre un glissement des première et deuxième surfaces de contact l'une par rapport à l'autre lors de l'étape d'expansion de l'élément expansible radialement.

En complément, l'effort de compression de chaque élément de compression des éléments de liaison temporaires et l'élément expansible radialement sont configurés de manière à maintenir les première et deuxième platines immobiles l'une par rapport à l'autre en l'absence d'expansion de l'élément expansible radialement.

Selon une autre caractéristique, l'étape de pré-positionnement des première et deuxième surfaces de contact est réalisée en utilisant un système de levage configuré pour incliner puis soulever le mât.

Selon un mode opératoire, le système de levage comprend au moins deux brins et il est configuré pour occuper un état dit relié et chargé dans lequel les brins sont tendus, le système de levage soutenant le mât ; un état dit relié et déchargé dans lequel les brins sont détendus, le système de levage ne soutenant pas le mât ainsi qu'un état dit détaché dans lequel le mât est détaché du système de levage.

Le système de levage passe de l'état relié et chargé à l'état relié et déchargé après l'étape de serrage des éléments de liaison temporaires.

Selon une autre caractéristique, l'élément expansible radialement est une bague expansible configurée pour occuper un état rétracté dans lequel la bague expansible a une section lui permettant d'être insérée dans le couple de premier et deuxième logements et un état expansé dans lequel la bague expansible a une section égale ou supérieure à celle des premier et deuxième logements.

Selon une autre caractéristique, chaque élément expansible radialement est retiré et remplacé par un pion de cisaillement avant le retrait des éléments de liaison temporaires.

Selon un mode opératoire, un pion de cisaillement est positionné dans chaque couple de premier et deuxième logements non occupés par un élément expansible radialement avant le retrait du (ou des) élément(s) expansible(s) radialement.

Selon un mode de réalisation, l'attache-voilure comprend, lorsque le mât est monté, au moins un pion de cisaillement avant disposé dans un premier plan transversal et au moins un pion de cisaillement arrière disposé dans un deuxième plan transversal décalé vers l'arrière par rapport au premier plan transversal. Dans ce cas, le procédé de montage se caractérise en ce qu'un premier élément expansible radialement est mis en place dans un couple de premier et deuxième logements disposés dans le premier plan transversal et en ce qu'un second élément expansible radialement est mis en place dans un couple de premier et deuxième logements disposés dans le deuxième plan transversal.

### DESCRIPTION DETAILLEE :

D'autres caractéristiques et avantages ressortiront de la description de l'invention qui va suivre, description donnée à titre d'exemple uniquement, en regard des dessins annexés parmi lesquels :
- la figure 1 est une vue latérale d'un aéronef,
- la figure 2 est une représentation schématique latérale d'un ensemble propulsif (la nacelle n'étant pas représentée) qui illustre un mode de réalisation,
- la figure 3 est une vue en perspective d'un mât d'aéronef relié à une voilure par une attache-voilure qui illustre un mode de réalisation,
- la figure 4 est une vue en perspective du mât visible sur la figure 3 à l'état démonté,
- la figure 5 est une représentation schématique selon une coupe transversale d'une attache-voilure avant qui illustre un premier mode de réalisation de l'invention dans un état d'assemblage définitif,
- les figures 6A à 6I sont des représentations schématiques selon une coupe transversale de l'attache-voilure avant visible sur la figure 5 qui illustrent les différentes étapes intermédiaires et chronologiques d'un procédé de montage d'un mât d'aéronef,
- la figure 7 est une représentation schématique selon une coupe transversale d'une attache-voilure avant qui illustre un deuxième mode de réalisation de l'invention dans un état d'assemblage définitif, et
- les figures 8A à 8F sont des représentations schématiques selon une coupe transversale de l'attache-voilure avant visible sur la figure 7 qui illustrent certaines étapes intermédiaires et chronologiques d'un procédé de montage d'un mât d'aéronef.

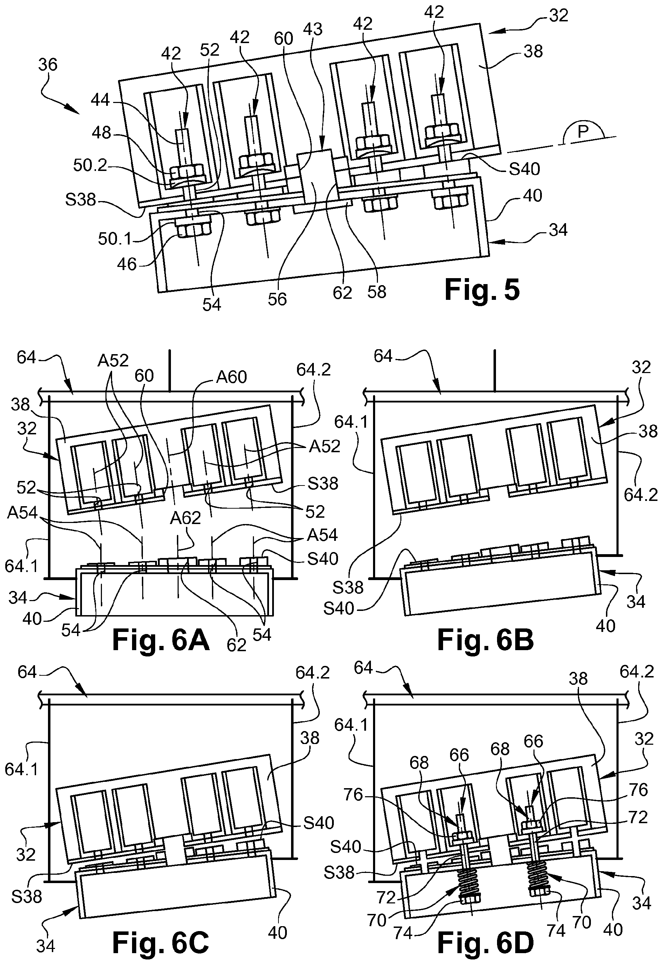

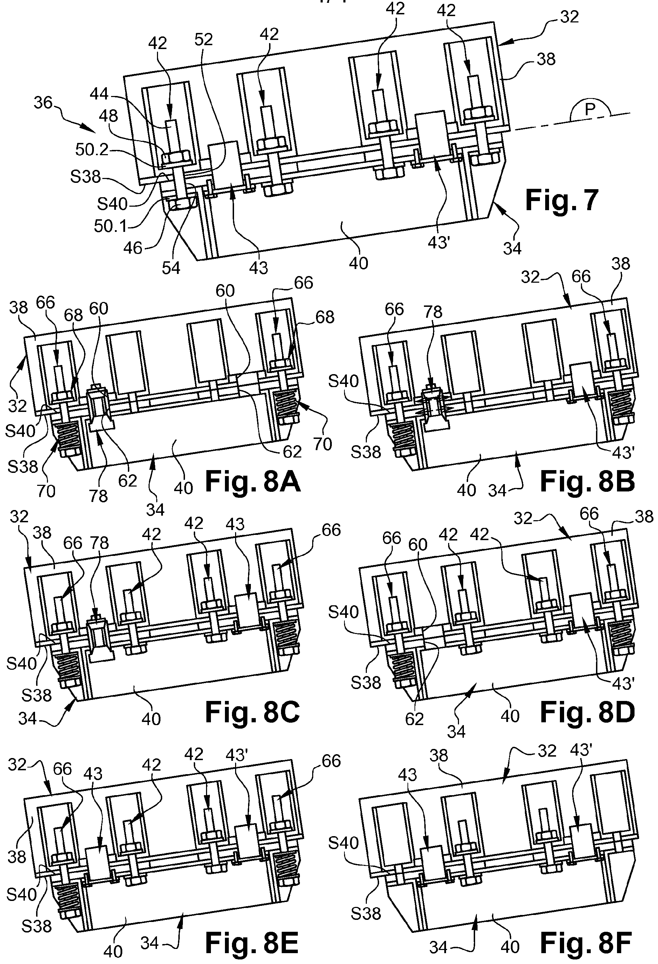

Sur les figures 5 et 7, on a représenté une voilure 32, un mât 34 relié à la voilure 32 par au moins une attache-voilure avant 36.

Selon un mode de réalisation, l'attache-voilure avant 36 comprend au moins une première platine 38 solidaire de la voilure 32, au moins une deuxième platine 40 solidaire du mât 34, une pluralité d'éléments de liaison définitifs 42, reliant lorsque le mât est monté les première et deuxième platines 38, 40, et au moins un pion de cisaillement 43.

Selon une configuration, la première platine 38 est une ferrure intégrée à la voilure 32 et la deuxième platine 40 est une partie de la structure primaire du mât 34.

La première platine 38 comprend au moins une première surface de contact S38. En complément, la deuxième platine 40 comprend au moins une deuxième surface de contact S40, les première et deuxième surfaces de contact S38, S40 étant plaquées l'une contre l'autre au niveau d'un plan de contact P lorsque le mât 34 est fixé à la voilure 32. Le plan de contact P n'est pas horizontal mais incliné par rapport à un plan horizontal correspondant à un plan sensiblement tangent à un panneau inférieur de la voilure 32. Le plan de contact P forme à titre d'exemple un angle de l'ordre de 10° avec un plan horizontal.

Selon un mode de réalisation, chaque élément de liaison définitif 42 est un boulon comprenant une tige 44, au moins partiellement filetée et présentant à une de ses extrémités une tête 46, ainsi qu'un écrou 48 configuré pour se visser sur la tige 44. Selon une orientation, en fonctionnement, la tête 46 est plaquée contre la deuxième platine 40 et l'écrou 48 est plaqué contre la première platine 38. L'élément de liaison définitif 42 peut également comprendre une première rondelle 50.1 intercalée entre la tête 46 et la deuxième platine 40 et/ou une deuxième rondelle 50.2 intercalée entre l'écrou 48 et la première platine 38. Selon un mode de réalisation visible sur la figure 7, les première et deuxième rondelles 50.1, 50.2 sont plates. Selon un autre mode de réalisation visible sur la figure 5, au moins l'une des première et deuxième rondelles 50.1, 50.2 est sphérique.

Selon une version simplifiée, chaque élément de liaison définitif 42 comprend une tige 44 au moins partiellement filetée et au moins un écrou 48 configuré pour se visser sur la tige 44.

Pour chaque élément de liaison définitif 42, la première platine 38 comprend un premier trou de passage 52 qui présente un diamètre supérieur à celui de la tige 44 et un axe A52 (visible sur la figure 6A) perpendiculaire à la première surface de contact S38 et au plan de contact P en fonctionnement. En complément, la deuxième platine 40 comprend un deuxième trou de passage 54 qui présente un diamètre supérieur à celui de la tige 44 et un axe A54 (visible sur la figure 6A) perpendiculaire à la deuxième surface de contact S40 et au plan de contact P en fonctionnement. Lorsque le mât 34 est fixé à la voilure 32, pour chaque élément de liaison définitif 42, les premier et deuxième trous de passage 52, 54 sont disposés dans le prolongement l'un de l'autre et les axes A52 et A54 sont confondus.

Selon un mode de réalisation visible notamment sur la figure 5, un pion de cisaillement 43 comprend un corps 56 cylindrique qui présente une section S et une tête 58 positionnée à une extrémité du corps 56, coaxiale au corps 56 et présentant une section supérieure à celle du corps 56. Le corps 56 présente une longueur (dimension prise selon l'axe de révolution du corps 56) suffisante lui permettant d'être positionné à cheval dans les première et deuxième platines 38, 40 lorsque le mât est monté.

Pour chaque pion de cisaillement 43, la première platine 38 comprend un premier logement 60 qui présente une section identique à la section S du corps 56 du pion de cisaillement 43 et un axe A60 (visible sur la figure 6A) perpendiculaire à la première surface de contact S38 et au plan de contact P en fonctionnement. La deuxième platine 40 comprend un deuxième logement 62 qui présente une section identique à la section S du corps 56 du pion de cisaillement 43 et un axe A62 (visible sur la figure 6A) perpendiculaire à la deuxième surface de contact S40 et au plan de contact P en fonctionnement. Lorsque le mât 34 est fixé à la voilure 32, pour chaque pion de cisaillement 43, les premier et deuxième logements 60, 62 sont disposés dans le prolongement l'un de l'autre et les axes A60 et A62 sont confondus.

Selon un premier mode de réalisation visible sur la figure 5, l'attache-voilure avant 36 comprend un unique pion de cisaillement 43. Selon un deuxième mode de réalisation visible sur la figure 7, l'attache-voilure avant 36 comprend plusieurs pions de cisaillement 43, par exemple des premier et deuxième pions de cisaillement avant 43, 43' disposés dans un premier plan transversal et un troisième pion de cisaillement arrière (non représenté) disposé dans un deuxième plan transversal décalé vers l'arrière par rapport au premier plan transversal. Bien entendu, l'invention n'est pas limitée à ces modes de réalisation.

Selon un premier mode de réalisation, un procédé de montage du mât 34 comprend :
- Une première étape de positionnement du mât 34 au-dessous de la voilure 32, sensiblement à l'aplomb de sa position fixée sur la voilure 32, comme illustré sur la figure 6A. Lors de cette première étape, le mât 34 peut reposer sur le sol ou être hissé selon une direction purement verticale pour être approché de la voilure 32.
- Une deuxième étape d'inclinaison du mât 34 de manière à ce que la deuxième surface de contact S40 de la deuxième platine 40 soit orientée parallèlement à la première surface de contact S38 de la première platine 38, comme illustré sur la figure 6B. Lors de cette deuxième étape, le mât 34 est incliné selon une direction de tangence par rapport à un panneau inférieur de la voilure 32. A titre d'exemple, le mât 34 est incliné d'environ 10°.
- Une troisième étape de rapprochement des première et deuxième surfaces de contact S38, S40 des première et deuxième platines 38, 40 de sorte que ces dernières soient approximativement parallèles et faiblement espacées ou en contact l'une contre l'autre, comme illustré sur la figure 6C, et de pré-alignement approximatif des premier et deuxième trous de passage de chaque couple de premier et deuxième trous de passage et des premier et deuxième logements de chaque couple de premier et deuxième logements.

A l'issue de cette troisième étape de rapprochement, les premier et deuxième trous de passage 52, 54 ainsi que les premier et deuxième logements 60, 62 sont alignés de façon aléatoire et approximative (dite à l'œil).

Un système de levage 64 peut être utilisé pour réaliser les deuxième et troisième étapes à savoir incliner puis soulever le mât 34. Ce système de levage 64 comprend au moins deux brins 64.1 et 64.2 reliés directement ou indirectement au mât 34. Selon un mode opératoire, le système de levage 64 est configuré pour occuper un état dit relié et chargé dans lequel les brins 64.1, 64.2 sont tendus, le système de levage 64 soutenant le mât 34, un état dit relié et déchargé dans lequel les brins 64.1, 64.2 sont détendus, le système de levage 64 ne soutenant pas le mât 34 et un état dit détaché dans lequel le mât 34 est détaché du système de levage 64.

Comme illustré sur la figure 6D, le procédé de montage du mât 34 comprend une quatrième étape de mise en place d'éléments de liaison temporaires 66, configurés pour compenser au moins partiellement le poids du mât 34, dans au moins certains couples de premier et deuxième trous de passage 52, 54. Chaque élément de liaison temporaire 66 comprend un boulon 68, éventuellement identique à celui d'un élément de liaison définitif 42, et au moins un élément de compression 70 (ressort, rondelle élastique ou autres) positionné sous le mât 34. Selon un mode de réalisation, le boulon 68 comprend une tige 72, au moins partiellement filetée et présentant à une de ses extrémités une tête 74, ainsi qu'un écrou 76 configuré pour se visser sur la tige 72 et éventuellement au moins une rondelle intercalée entre l'écrou 76 et la première platine 38 et/ou entre la tête 74 et la deuxième platine 40. Chaque élément de compression 70 est un ressort intercalé entre la tête 74 du boulon 68 et la deuxième platine 40.

Le nombre et la répartition des éléments de liaison temporaires 66 sont déterminés de manière à assurer une répartition homogène des efforts de contact entre les première et deuxième surfaces de contact S38, S40. Dans tous les cas, certains couples de premier et deuxième trous de passage 52, 54 sont libres et non occupés par les éléments de liaison temporaires 66. Durant les deuxième, troisième et quatrième étapes, le système de levage 64 est à 'l'état relié et chargé.

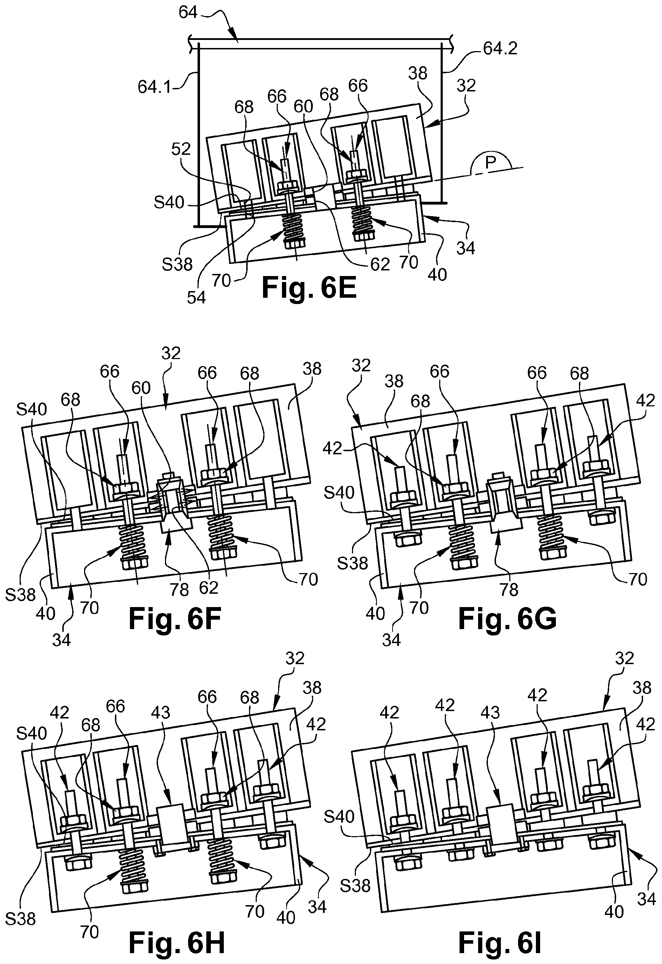

Le procédé de montage du mât 34 comprend une cinquième étape de serrage des éléments de liaison temporaires 66 afin de comprimer leurs éléments de compression 70, comme illustré sur la figure 6E. Le système de levage 64 passe de l'état relié et chargé à l'état relié et déchargé après l'étape de serrage des éléments de liaison temporaires 66.

L'effort de compression est déterminé de sorte que les première et deuxième surfaces de contact S38, S40 soient en contact au niveau du plan de contact P et que les efforts de compression des première et deuxième surfaces de contact S38, S40 l'une contre l'autre soient tels que les première et deuxième surfaces de contact S38, S40 ne puissent pas glisser l'une par rapport à l'autre dans le plan de contact P lorsqu'aucun effort parallèle au plan de contact P n'est exercé et puissent glisser l'une par rapport à l'autre lorsqu'au moins un effort parallèle au plan de contact P est exercé.

Le procédé de montage du mât 34 comprend une sixième étape de mise en place à cheval dans au moins un couple de premier et deuxième logements 60, 62 d'un élément expansible radialement 78, comme illustré sur la figure 6F, et d'expansion radiale dudit élément expansible radialement 78. Selon une configuration, l'élément expansible radialement 78 est une bague expansible configurée pour occuper un état rétracté dans lequel la bague expansible a une section lui permettant d'être insérée dans un couple de premier et deuxième logements 60, 62 même si ces derniers ne sont pas parfaitement alignés et un état expansé dans lequel la bague expansible a une section égale ou supérieure à celle des premier et deuxième logements 60, 62.

L'effort de compression de chaque élément de compression 70 des éléments de liaison temporaires 66 et l'élément expansible radialement 78 sont configurés de manière à permettre un glissement des première et deuxième surfaces de contact S38, S40 l'une par rapport à l'autre lors de l'expansion de l'élément expansible radialement 78 et à maintenir les première et deuxième platines 38, 40 immobiles l'une par rapport à l'autre en l'absence d'expansion de l'élément expansible radialement 78.

Après l'expansion de l'élément expansible radialement 78 jusqu'à atteindre une section identique à celles des premier et deuxième logements 60, 62, pour chaque élément de liaison définitif 42, les premier et deuxième trous de passage 52, 54 sont alignés, comme illustré sur la figure 6G.

Le procédé de montage du mât 34 comprend une septième étape de mise en place d'éléments de liaison définitifs 42 dans les couples de premier et deuxième trous de passage 52, 54 non occupés par les éléments de liaison temporaires 66. Ces éléments de liaison définitifs 42 sont serrés de manière à empêcher tout glissement des première et deuxième surfaces de contact S38, S40 l'une par rapport à l'autre.

Lors d'une huitième étape, l'élément expansible radialement 78 est retiré et remplacé par un pion de cisaillement 43, comme illustré par la figure 6H. Durant les cinquième, sixième, septième et huitième étapes, le système de levage 64 est à l'état relié et déchargé. A l'issue de la huitième, le mât 34 est détaché du système de levage 64.

Lors d'une neuvième étape, les éléments de liaison temporaires 66 restants sont retirés et remplacés par des éléments de liaison définitifs 42, comme illustré sur la figure 6I. Tous les éléments de liaison définitifs 42 sont alors serrés de manière définitive en fonction des efforts de traction souhaités pour chacun d'eux.

En variante, le mât 34 pourrait être détaché du système de levage 64 à l'issue de la mise en place de tous les pions de cisaillement 43 et de tous les éléments de liaison définitifs 42. De même, le remplacement des éléments de liaison temporaires 66 par des éléments de liaison définitifs 42 pourrait être réalisé avant le remplacement du ou des élément(s) expansible(s) radialement 78 par le ou les pion(s) de cisaillement 43.

Le procédé de montage selon le premier mode de réalisation est plus particulièrement adapté lorsque l'attache-voilure 36 ne comprend qu'un unique pion de cisaillement 43, comme illustré sur la figure 5.

Certaines étapes d'un procédé de montage d'un mât dont l'attache-voilure 36 comprend plusieurs pions de cisaillement 43, comme illustré sur la figure 7, sont décrites sur les figures 8A à 8F.

L'attache-voilure 36 comprend au moins un pion de cisaillement avant 43 disposé dans un premier plan transversal et au moins un pion de cisaillement arrière disposé dans un deuxième plan transversal décalé vers l'arrière par rapport au premier plan transversal.

Les cinq premières étapes visant à rapprocher les première et deuxième surfaces de contact S38, S40, de mise en place et de serrage des éléments de liaison temporaires 66 sont identiques à celles du premier mode de réalisation. Ces éléments de liaison temporaires 66 sont positionnés à l'avant et à l'arrière de l'attache-voilure avant 36. A l'issue de cette cinquième étape, le mât 34 est détaché du système de levage 64.

Lors d'une sixième étape, deux éléments expansibles radialement 78 sont mis en place, un premier élément expansible radialement 78 dans un couple de premier et deuxième logements 60, 62 disposés dans le premier plan transversal (visible sur la figure 8A) et un second élément expansible radialement dans un couple de premier et deuxième logements 60, 62 disposés dans le deuxième plan transversal (non représenté). Après l'expansion des éléments expansibles radialement 78 jusqu'à atteindre une section identique à celles des premier et deuxième logements 60, 62, pour chaque élément de liaison définitif 42, les premier et deuxième trous de passage 52, 54 sont alignés, comme illustré sur la figure 8B.

Lors d'une septième étape, un pion de cisaillement 43 est positionné dans le couple de premier et deuxième logements 60, 62 disposés dans le premier plan transversal, non occupés par l'un des éléments expansibles radialement 78, comme illustré sur la figure 8B.

Lors d'une huitième étape visible sur la figure 8C, des éléments de liaison définitifs 42 sont mis en place dans les couples de premier et deuxième trous de passage 52, 54 non occupés par les éléments de liaison temporaires 66. Ces éléments de liaison définitifs 42 sont serrés de manière à empêcher tout glissement des première et deuxième surfaces de contact S38, S40 l'une par rapport à l'autre. Un (ou des) pion(s) de cisaillement 43 est (ou sont) positionné(s) dans le (ou les) couple(s) de premier et deuxième logements non occupés par le (ou les) élément(s) expansible(s) radialement 78.

Lors d'une neuvième étape illustrée par les figures 8D et 8E, les éléments expansibles radialement 78 sont retirés et remplacés par des pions de cisaillement 43. Enfin, lors d'une dixième étape illustrée par les figures 8F et 7, les éléments de liaison temporaires 66 sont retirés et remplacés par des éléments de liaison définitifs 42. Tous les éléments de liaison définitifs 42 sont alors serrés de manière définitive en fonction des efforts de traction souhaités pour chacun d'eux.

Quel que soit le mode opératoire, le procédé de montage d'un mât comprend une étape de pré-positionnement des première et deuxième surfaces de contact S38, S40, une étape de mise en place et de serrage d'éléments de liaison temporaires 66 dans certains couples de premier et deuxième trous de passage 52, 54, une étape de mise en place et d'expansion d'au moins un élément expansible radialement 78 dans au moins un couple de premier et deuxième logements 60, 62, une étape de mise en place et de serrage d'éléments de liaison définitifs 42 dans au moins certains des couples de premier et deuxième trous de passage 52, 54 non occupés par les éléments de liaison temporaires 66 de manière à empêcher tout glissement des première et deuxième surfaces de contact S38, S40 l'une par rapport à l'autre, des étapes de retrait du ou des élément(s) expansible(s) radialement 78 et des éléments de liaison temporaires 66 et de mise en place du ou des pion(s) de cisaillement 43 et des éléments de liaison définitifs 42 restants.

Le (ou les) élément(s) expansible(s) radialement 78 est (sont) retiré(s) et remplacé(s) par le (ou les) pion(s) de cisaillement avant le retrait des éléments de liaison temporaire 66 pour limiter les risques de glissement entre les première et deuxième surfaces de contact S38, S40 lors du retrait des éléments de liaison temporaire 66.

Ce procédé de montage du mât permet de simplifier sa mise en œuvre.

## Revendications

1. Procédé de montage d'un mât (34) d'aéronef relié à une voilure (32) par au moins une attache-voilure avant (36) comprenant :
- au moins une première platine (38) solidaire de la voilure (32) qui présente une première surface de contact (S38),
- au moins une deuxième platine (40) solidaire du mât (34) qui présente une deuxième surface de contact (S40),
- une pluralité d'éléments de liaison définitifs (42) reliant, lorsque le mât (34) est monté, les première et deuxième platines (38, 40) en maintenant les première et deuxième surfaces de contact l'une contre l'autre au niveau d'un plan de contact (P) incliné pour chaque élément de liaison définitif (42), les première et deuxième platines (38, 40) comportant respectivement un couple de premier et deuxième trous de passage (52, 54),
- au moins un pion de cisaillement (43) positionné, lorsque le mât est monté, à cheval dans un couple de premier et deuxième logements (60, 62) prévus respectivement dans les première et deuxième platines (38, 40) et qui présentent chacun une section identique à celle du pion de cisaillement (43), tel que le procédé de montage comprend :
- une étape de pré-positionnement des première et deuxième surfaces de contact (S38, S40), de sorte que les première et deuxième surfaces de contact (S38, S40) soient approximativement parallèles et faiblement espacées ou en contact l'une contre l'autre, et de pré-alignement approximatif des premier et deuxième trous de passage (52, 54) de chaque couple de premier et deuxième trous de passage (52, 54) et des premier et deuxième logements (60, 62) de chaque couple de premier et deuxième logements (60, 62),
- une étape de mise en place et de serrage d'éléments de liaison temporaires (66) dans certains couples de premier et deuxième trous de passage (52, 54), de manière à maintenir plaquées les première et deuxième surfaces de contact (S38, S40) l'une contre l'autre,
- une étape de mise en place et d'expansion d'au moins un élément expansible radialement (78) dans l'au moins un couple de premier et deuxième logements (60, 62),
- une étape de mise en place et de serrage d'éléments de liaison définitifs (42) dans au moins certains des couples de premier et deuxième trous de passage (52, 54) non occupés par les éléments de liaison temporaires (66),
- des étapes de retrait du (ou des) élément(s) expansible(s) radialement (78) et de mise en place du ou des pion(s) de cisaillement (43) ainsi que de retrait des éléments de liaison temporaires (66) et de mise en place des éléments de liaison définitifs (42).

2. Procédé de montage d'un mât d'aéronef selon la revendication 1, tel que chaque élément de liaison temporaire (66) comprend au moins un élément de compression (70) positionné sous le mât (34), l'étape de serrage des éléments de liaison temporaires (66) permettant d'obtenir un effort de compression de chaque élément de compression (70), l'effort de compression de chaque élément de compression (70) des éléments de liaison temporaires (66) et l'élément expansible radialement (78) étant configurés de manière à permettre un glissement des première et deuxième surfaces de contact (S38, S40) l'une par rapport à l'autre lors de l'étape d'expansion de l'élément expansible radialement (78).

3. Procédé de montage d'un mât d'aéronef selon la revendication précédente, tel que l'effort de compression de chaque élément de compression (70) des éléments de liaison temporaires (66) et l'élément expansible radialement (78) sont configurés de manière à maintenir les première et deuxième platines (38, 40) immobiles l'une par rapport à l'autre en l'absence d'expansion de l'élément expansible radialement (78).

4. Procédé de montage d'un mât d'aéronef selon l'une des revendications précédentes, tel que l'étape de pré-positionnement des première et deuxième surfaces de contact (S38, S40) est réalisée en utilisant un système de levage (64) configuré pour incliner puis soulever le mât (34).

5. Procédé de montage d'un mât d'aéronef selon la revendication précédente, tel que le système de levage (64) comprend au moins deux brins (64.1, 64.2) et qu'il est configuré pour occuper un état dit relié et chargé dans lequel les brins (64.1, 64.2) sont tendus, le système de levage (64) soutenant le mât (34), un état dit relié et déchargé dans lequel les brins (64.1, 64.2) sont détendus, le système de levage (64) ne soutenant pas le mât (34), et un état dit détaché dans lequel le mât (34) est détaché du système de levage (64).

6. Procédé de montage d'un mât d'aéronef selon la revendication précédente, tel que le système de levage (64) passe de l'état relié et chargé à l'état relié et déchargé après l'étape de serrage des éléments de liaison temporaires (66).

7. Procédé de montage d'un mât d'aéronef selon l'une des revendications précédentes, tel que l'élément expansible radialement (78) est une bague expansible configurée pour occuper un état rétracté dans lequel la bague expansible a une section lui permettant d'être insérée dans le couple de premier et deuxième logements (60, 62) et un état expansé dans lequel la bague expansible a une section égale ou supérieure à celle des premier et deuxième logements (60, 62).

8. Procédé de montage d'un mât d'aéronef selon l'une des revendications précédentes, tel que chaque élément expansible radialement (78) est retiré et remplacé par un pion de cisaillement avant le retrait des éléments de liaison temporaires (66).

9. Procédé de montage d'un mât d'aéronef selon la revendication précédente, tel qu'un pion de cisaillement (43) est positionné dans chaque couple de premier et deuxième logements non occupés par un élément expansible radialement (78) avant le retrait du (ou des) élément(s) expansible(s) radialement (78).

10. Procédé de montage d'un mât d'aéronef selon l'une des revendications précédentes, l'attache-voilure (36) comprenant, lorsque le mât est monté, au moins un pion de cisaillement avant (43) disposé dans un premier plan transversal et au moins un pion de cisaillement (43) arrière disposé dans un deuxième plan transversal décalé vers l'arrière par rapport au premier plan transversal, tel qu'un premier élément expansible radialement (78) est mis en place dans un couple de premier et deuxième logements (60, 62) disposés dans le premier plan transversal et en ce qu'un second élément expansible radialement est mis en place dans un couple de premier et deuxième logements (60, 62) disposés dans le deuxième plan transversal.

## Patentansprüche

1. Verfahren zur Montage eines Pylons (34) eines Luftfahrzeugs, der mit einem Tragflügel (32) über wenigstens eine vordere Tragflügelverbindungsvorrichtung (36) verbunden ist, welche umfasst:
- wenigstens eine mit dem Tragflügel (32) fest verbundene erste Platte (38), welche eine erste Kontaktfläche (S38) aufweist,
- wenigstens eine mit dem Pylon (34) fest verbundene zweite Platte (40), welche eine zweite Kontaktfläche (S40) aufweist,
- mehrere endgültige Verbindungselemente (42), welche, wenn der Pylon (34) montiert ist, die erste und die zweite Platte (38, 40) verbinden, indem sie die erste und die zweite Kontaktfläche für jedes endgültige Verbindungselement (42) an einer geneigten Kontaktebene (P) aneinander festhalten, wobei die erste und die zweite Platte (38, 40) ein Paar aus einem ersten bzw. einem zweiten Durchgangsloch (52, 54) aufweisen,
- wenigstens einen Scherbolzen (43), der, wenn der Pylon montiert ist, übergreifend in einem Paar aus einer ersten und einer zweiten Aufnahme (60, 62) positioniert ist, die in der ersten bzw. zweiten Platte (38, 40) vorgesehen sind und die jeweils einen Querschnitt aufweisen, der mit demjenigen des Scherbolzens (43) identisch ist,
derart, dass das Verfahren zur Montage umfasst:
- einen Schritt der Vorpositionierung der ersten und zweiten Kontaktfläche (S38, S40), so dass die erste und die zweite Kontaktfläche (S38, S40) annähernd parallel sind und einen geringen Abstand voneinander haben oder sich miteinander in Kontakt befinden, und der ungefähren Vorausrichtung des ersten und zweiten Durchgangsloches (52, 54) jedes Paares aus einem ersten und einem zweiten Durchgangsloch (52, 54) und der ersten und zweiten Aufnahme (60, 62) jedes Paares aus einer ersten und einer zweiten Aufnahme (60, 62),
- einen Schritt der Anbringung und des Festziehens von vorläufigen Verbindungselementen (66) in einigen Paaren aus einem ersten und einem zweiten Durchgangsloch (52, 54), um so die erste und zweite Kontaktfläche (S38, S40) aneinandergepresst zu halten,
- einen Schritt der Anbringung und Dehnung wenigstens eines radial dehnbaren Elements (78) in wenigstens einem Paar aus einer ersten und einer zweiten Aufnahme (60, 62),
- einen Schritt der Anbringung und des Festziehens von endgültigen Verbindungselementen (42) in wenigstens einigen der Paare aus einem ersten und einem zweiten Durchgangsloch (52, 54), die nicht von den vorläufigen Verbindungselementen (66) belegt sind,
- Schritte des Entfernens des (oder der) radial dehnbaren Elements (Elemente) (78) und der Anbringung des oder der Scherbolzen(s) (43) sowie des Entfernens der vorläufigen Verbindungselemente (66) und der Anbringung der endgültigen Verbindungselemente (42).

2. Verfahren zur Montage eines Pylons eines Luftfahrzeugs nach Anspruch 1, derart, dass jedes vorläufige Verbindungselement (66) wenigstens ein Druckelement (70) umfasst, das unter dem Pylon (34) positioniert ist, wobei der Schritt des Festziehens der vorläufigen Verbindungselemente (66) ermöglicht, eine Druckkraft jedes Druckelements (70) zu erzielen, wobei die Druckkraft jedes Druckelements (70) der vorläufigen Verbindungselemente (66) und das radial dehnbare Element (78) so beschaffen sind, dass sie ein Gleiten der ersten und zweiten Kontaktfläche (S38, S40) relativ zueinander während des Schrittes der Dehnung des radial dehnbaren Elements (78) ermöglichen.

3. Verfahren zur Montage eines Pylons eines Luftfahrzeugs nach dem vorhergehenden Anspruch, derart, dass die Druckkraft jedes Druckelements (70) der vorläufigen Verbindungselemente (66) und das radial dehnbare Element (78) so beschaffen sind, dass die erste und zweite Platte (38, 40) relativ zueinander unbeweglich gehalten werden, wenn keine Dehnung des radial dehnbaren Elements (78) erfolgt.

4. Verfahren zur Montage eines Pylons eines Luftfahrzeugs nach einem der vorhergehenden Ansprüche, derart, dass der Schritt der Vorpositionierung der ersten und zweiten Kontaktfläche (S38, S40) unter Verwendung eines Hebesystems (64) durchgeführt wird, das dafür ausgelegt ist, den Pylon (34) zu neigen und anschließend zu heben.

5. Verfahren zur Montage eines Pylons eines Luftfahrzeugs nach dem vorhergehenden Anspruch, derart, dass das Hebesystem (64) wenigstens zwei Stränge (64.1, 64.2) umfasst, und dass es dafür ausgelegt ist, einen sogenannten verbundenen und belasteten Zustand einzunehmen, in welchem die Stränge (64.1, 64.2) gespannt sind, wobei das Hebesystem (64) den Pylon (34) hält, einen sogenannten verbundenen und entlasteten Zustand, in welchem die Stränge (64.1, 64.2) entspannt sind, wobei das Hebesystem (64) den Pylon (34) nicht hält, und einen sogenannten gelösten Zustand, in welchem der Pylon (34) von dem Hebesystem (64) gelöst ist.

6. Verfahren zur Montage eines Pylons eines Luftfahrzeugs nach dem vorhergehenden Anspruch, derart, dass das Hebesystem (64) nach dem Schritt des Festziehens der vorläufigen Verbindungselemente (66) vom verbundenen und belasteten Zustand zum verbundenen und entlasteten Zustand übergeht.

7. Verfahren zur Montage eines Pylons eines Luftfahrzeugs nach einem der vorhergehenden Ansprüche, derart, dass das radial dehnbare Element (78) ein dehnbarer Ring ist, der dafür ausgelegt ist, einen zusammengezogenen Zustand einzunehmen, in welchem der dehnbare Ring einen Querschnitt aufweist, der es ermöglicht, dass er in das Paar aus einer ersten und einer zweiten Aufnahme (60, 62) eingesetzt wird, und einen gedehnten Zustand, in welchem der dehnbare Ring einen Querschnitt aufweist, der größer oder gleich demjenigen der ersten und zweiten Aufnahme (60, 62) ist.

8. Verfahren zur Montage eines Pylons eines Luftfahrzeugs nach einem der vorhergehenden Ansprüche, derart, dass jedes radial dehnbare Element (78) vor dem Entfernen der vorläufigen Verbindungselemente (66) entfernt und durch einen Scherbolzen ersetzt wird.

9. Verfahren zur Montage eines Pylons eines Luftfahrzeugs nach dem vorhergehenden Anspruch, derart, dass vor dem Entfernen des (oder der) radial dehnbaren Elements (Elemente) (78) ein Scherbolzen (43) in jedem Paar aus einer ersten und einer zweiten Aufnahme positioniert wird, die nicht von einem radial dehnbaren Element (78) belegt sind.

10. Verfahren zur Montage eines Pylons eines Luftfahrzeugs nach einem der vorhergehenden Ansprüche, wobei die Tragflügelverbindungsvorrichtung (36), wenn der Pylon montiert ist, wenigstens einen vorderen Scherbolzen (43), der in einer ersten Querebene angeordnet ist, und wenigstens einen hinteren Scherbolzen (43), der in einer bezüglich der ersten Querebene nach hinten versetzten zweiten Querebene angeordnet ist, umfasst, derart, dass ein erstes radial dehnbares Element (78) in einem Paar aus einer ersten und einer zweiten Aufnahme (60, 62), die in der ersten Querebene angeordnet sind, angebracht wird, und dadurch, dass ein zweites radial dehnbares Element in einem Paar aus einer ersten und einer zweiten Aufnahme (60, 62), die in der zweiten Querebene angeordnet sind, angebracht wird.

## Claims

1. Method for mounting an aircraft pylon (34) connected to a wing (32) by at least one front wing attachment (36) comprising:
- at least one first plate (38) secured to the wing (32) which has a first contact surface (S38),
- at least one second plate (40) secured to the pylon (34) which has a second contact surface (S40),
- a plurality of final connection elements (42) which, when the pylon (34) is mounted, connect the first and second plates (38, 40) by holding the first and second contact surfaces against one another at a plane of contact (P) that is inclined for each final connection element (42), the first and second plates (38, 40) respectively comprising a pair of first and second through-holes (52, 54),
- at least one shear pin (43) which, when the pylon is mounted, straddles a pair of first and second receptacles (60, 62) which are respectively provided in the first and second plates (38, 40) and which each have a cross section identical to that of the shear pin (43),
such that the mounting method comprises:
- a step of pre-positioning the first and second contact surfaces (S38, S40), such that the first and second contact surfaces (S38, S40) are approximately parallel and close to or in contact with one another, and of approximately pre-aligning the first and second through-holes (52, 54) of each pair of first and second through-holes (52, 54) and pre-aligning the first and second receptacles (60, 62) of each pair of first and second receptacles (60, 62),
- a step of installing and tightening temporary connection elements (66) in certain pairs of first and second through-holes (52, 54), so as to keep the first and second contact surfaces (S38, S40) clamped against one another,
- a step of installing and expanding at least one radially expandable element (78) in at least one pair of first and second receptacles (60, 62),
- a step of installing and tightening final connection elements (42) in at least some of the pairs of first and second through-holes (52, 54) that are not occupied by the temporary connection elements (66),
- steps of removing the radially expandable element(s) (78) and installing the shear pin(s) (43), and of removing the temporary connection elements (66) and installing the final connection elements (42).

2. Method for mounting an aircraft pylon according to Claim 1, such that each temporary connection element (66) comprises at least one compression element (70) positioned below the pylon (34), the step of tightening the temporary connection elements (66) serving to obtain a compression force of each compression element (70), the compression force of each compression element (70) of the temporary connection elements (66) and the radially expandable element (78) being configured so as to allow the first and second contact surfaces (S38, S40) to slide with respect to one another during the step of expanding the radially expandable element (78).

3. Method for mounting an aircraft pylon according to the preceding claim, such that the compression force of each compression element (70) of the temporary connection elements (66) and the radially expandable element (78) are configured so as to keep the first and second plates (38, 40) immobile with respect to one another when the radially expandable element (78) is not expanded.

4. Method for mounting an aircraft pylon according to one of the preceding claims, such that the step of pre-positioning the first and second contact surfaces (S38, S40) is carried out using a lifting system (64) configured to tilt then lift the pylon (34).

5. Method for mounting an aircraft pylon according to the preceding claim, such that the lifting system (64) comprises at least two strands (64.1, 64.2) and that it is configured to occupy a so-called connected and loaded state in which the strands (64.1, 64.2) are taut, with the lifting system (64) supporting the pylon (34), a so-called connected and unloaded state in which the strands (64.1, 64.2) are slack, with the lifting system (64) not supporting the pylon (34), and a so-called detached state in which the pylon (34) is detached from the lifting system (64).

6. Method for mounting an aircraft pylon according to the preceding claim, such that the lifting system (64) passes from the connected and loaded state to the connected and unloaded state after the step of tightening the temporary connection elements (66).

7. Method for mounting an aircraft pylon according to one of the preceding claims, such that the radially expandable element (78) is an expandable ring configured to occupy a retracted state in which the expandable ring has a cross section allowing it to be inserted into the pair of first and second receptacles (60, 62) and an expanded state in which the expandable ring has a cross section equal to or greater than that of the first and second receptacles (60, 62).

8. Method for mounting an aircraft pylon according to one of the preceding claims, such that each radially expandable element (78) is removed and replaced with a shear pin prior to removal of the temporary connection elements (66).

9. Method for mounting an aircraft pylon according to the preceding claim, such that a shear pin (43) is positioned in each pair of first and second receptacles not occupied by a radially expandable element (78) prior to removal of the radially expandable element(s) (78).

10. Method for mounting an aircraft pylon according to one of the preceding claims, the wing attachment (36) comprising, when the pylon is mounted, at least one front shear pin (43) arranged in a first transverse plane and at least one rear shear pin (43) arranged in a second transverse plane which is offset to the rear relative to the first transverse plane, such that a first radially expandable element (78) is installed in a pair of first and second receptacles (60, 62) arranged in the first transverse plane, and that a second radially expandable element is installed in a pair of first and second receptacles (60, 62) arranged in the second transverse plane.
